# EUROPEAN PATENT APPLICATION

(11) **EP 4 575 508 A1**
(43) Date of publication of application: **25.06.2025**
(21) Application number: 23220109.5
(22) Date of filing: 22.12.2023
(51) Int. Cl.: G01N 35/00, B01L 3/02, B01L 9/00, G01N 35/10

(54) **METHOD, COMPUTER PROGRAM AND LABORATORY AUTOMATION DEVICE FOR ASPIRATING A LIQUID OUT OF A VIAL, CONTROLLER FOR CONTROLLING THE LABORATORY AUTOMATION DEVICE, AND COMPUTER-READABLE MEDIUM**

(71) Applicant: Tecan Trading AG, 8708 Männedorf (CH)
(72) Inventor: SCHÄRER, Florian, 8617 Mönchaltorf (CH)
(74) Representative: Sykora & König Patentanwälte PartG mbB

(57) **Abstract**

A method for aspirating a liquid (46) out of a vial (34) by a laboratory automation device (10) is described. The vial (34) is transparent and comprises the liquid (46) and a probe material (40) covered by the liquid (46). The laboratory automation device (10) comprises a camera (38) for capturing an image of the vial (34) and a liquid handler (15). The liquid handler (15) comprises at least one liquid handler tool (30, 32) and the liquid handler tool (30, 32) comprises a liquid handler tip (54) for aspirating the liquid (46). The laboratory automation device (10) further comprises an actuator (20) coupled to the liquid handler tool (30, 32) and being configured for moving the liquid handler tool (30, 32) into the vial (34), and an aspiration unit (56) coupled to the liquid handler tool (30, 32) and being configured for generating an underpressure within the liquid handler tool (30, 32). The method comprises: sending a first capturing signal to the camera (38), wherein the first capturing signal and the camera (38) are configured such that the camera (38) captures a first image of the vial (34) such that the first image shows a first view of at least an upper surface (42) of the probe material (40) covered by the liquid (46); receiving image data from the camera (38), wherein the image data is representative of the first image; determining a position of a lowermost area (44) of the upper surface (42) of the probe material (40) from the image data; sending a movement signal to the actuator (20), wherein the movement signal and the actuator (20) are configured such that the actuator (20) moves the liquid handler tool (30, 32) into the vial (34) such that the liquid handler tip (54) is dipped into the liquid (46) and is moved towards the lowermost area (44) of the upper surface (42) of the probe material (40), upon receiving the movement signal; and sending an aspiration signal to the liquid handler (15), wherein the aspiration signal and the liquid handler (15) are configured such that the liquid handler (15) aspirates the liquid (46) from above the lowermost area (44) of the upper surface (42) of the probe material (40) by the liquid handler tip (54) upon receiving the aspiration signal.

## Description

### FIELD OF THE INVENTION

The invention relates to a method, a computer program, and a laboratory automation device for aspirating a liquid out of a vial. The invention further relates to a controller for controlling the laboratory automation device, and to a computer-readable medium on which the computer program is stored.

### BACKGROUND OF THE INVENTION

Laboratory automation devices are used for automating tasks of a laboratory assistant, which, for example, tests a patient for specific diseases. To this end, a suspension comprising a liquid and a probe material from the patient may be analysed. The probe material may be solved in the liquid. The suspension may be taken from the patient directly, or the probe material may be taken from the patient and may be mixed with the liquid in order to provide the suspension. The liquid may be blood or a culture medium and the suspension may be blood cells within the blood or, respectively, any cells within the culture medium. In this context, the probe material may be the cells, in particular the blood cells, for example red blood cells.

The suspension may be filled into a vial. The vial may be referred to as tube or test tube. The vial comprising the suspension may be placed in a centrifuge and may be centrifuged to separate the probe material from the fluid. After this centrifugation process, the probe material is located underneath the liquid within the vial and the liquid covers the probe material within the vial. An upper surface of the probe material may be a phase interface between the fluid liquid and the probe material. Before analysing the probe material, the liquid may have to be removed, e.g. by a liquid handler comprising a liquid handler tool for removing the liquid from the vial.

However, the upper surface of the probe material may be shaped during the centrifugation process depending on the type of centrifuge rotor and radius used in the centrifugation process. In addition, it is known to arrange multiple vials comprising corresponding suspensions in a carrier at fixed locations and to centrifugate the whole carrier with all the vials to separate the probe materials from the liquids in all of the vials simultaneously. In this case, the upper surface of the probe material may also be shaped depending on the fixed locations of the vials within the carrier. For example, when the carrier is centred with respect to an axis of rotation of the centrifuge, an inclination of the upper surface of the probe material may be all the steeper the farer away the position of the vial is from the axis of rotation of the centrifuge. Therefore, the upper surface of the probe material may be slanted with respect to an axis of rotation of the vial when the vial and in particular its axis of rotation are oriented vertically. So, the upper surface of the probe material may not be horizontally oriented when the axis of rotation of the vial is vertically oriented and when the upper surface of the liquid is horizontally oriented.

So, when automatically moving the liquid handler tool centrally into the vial for aspirating the liquid out of the vial, as it is known in the art, it may be the case that not all the liquid can be removed, because it may be that a lowermost area of the slanted surface of the probe material is not at the radial centre of the vial and cannot be reached by a liquid handler tip of the liquid handler tool in order to remove the lowest portions of the liquid above the lowermost area of the upper surface of the probe material. In the result, a rest of the liquid stays within the vial above the probe material and may contaminate the probe material with respect to the following analysis of the probe material.

Alternatively, in order to securely remove all of the liquid from the vial, the liquid handler tip may be automatically lowered so far that at least a part of the probe material is also removed. In the result, the probe material is depleted of the liquid above the probe material but the amount of the probe material is reduced. This may compromise the following analysis of the probe material. For example, it might be the case that there is not sufficient probe material left in order to carry out the analysis accurately enough.

### DESCRIPTION OF THE INVENTION

It is an objective of the invention to provide a method, a computer program, and a laboratory automation device for aspirating a liquid out of a vial by a laboratory automation device, which may contribute to that a high amount, e.g. a maximal amount, e.g. all, of the liquid can be removed from the vial, in particular without removing a probe material which is located below the liquid in the vial. Further, it is an object of the present invention to provide a controller for the laboratory automation device and a computer-readable medium on which the computer program is stored.

These objectives are achieved by the subject-matter of the independent claims. Further exemplary embodiments are evident from the dependent claims and the following description.

An aspect of the present invention relates to a method for aspirating a liquid out of a vial by a laboratory automation device. The vial is transparent and comprises the liquid and a probe material covered by the liquid. The laboratory automation device comprises a camera for capturing an image of the vial, a liquid handler, and an aspiration unit. The liquid handler comprises at least one liquid handler tool and an actuator coupled to the liquid handler tool, and is configured for moving the liquid handler tool into the vial. The aspiration unit is coupled to the liquid handler tool and is configured for generating an underpressure within the liquid handler tool. The liquid handler tool comprises a liquid handler tip for aspirating the liquid. The method comprises: sending a first capturing signal to the camera, wherein the first capturing signal and the camera are configured such that the camera captures a first image of the vial such that the first image shows a first view of at least an upper surface of the probe material covered by the liquid; receiving image data from the camera, wherein the image data is representative of the first image; determining a position of a lowermost area of the upper surface of the probe material from the image data; sending a movement signal to the actuator, wherein the movement signal and the actuator are configured such that the actuator moves the liquid handler tool into the vial such that the liquid handler tip is dipped into the liquid and is moved towards the lowermost area of the upper surface of the probe material, upon receiving the movement signal; and sending an aspiration signal to the liquid handler, wherein the aspiration signal and the liquid handler are configured such that the liquid handler aspirates the liquid from above the lowermost area of the upper surface of the probe material by the liquid handler tip upon receiving the aspiration signal.

Another aspect of the present invention relates to a controller for controlling the laboratory automation device. The controller comprises a memory for storing image data and a processor communicatively coupled to the memory and being configured for carrying out the method as described above and in the following.

Another aspect of the present invention relates to the laboratory automation device for aspirating the liquid out of the vial. The vial is transparent and comprises the liquid and the probe material covered by the liquid. The laboratory automation device comprises: the controller as described above and in the following; the camera being communicatively coupled to the controller and being configured for capturing the image of the vial; and the liquid handler being communicatively coupled to the controller and comprising the at least one liquid handler tool, the actuator coupled to the liquid handler tool and being configured for moving the liquid handler tool into the vial, and the aspiration unit coupled to the liquid handler tool and being configured for generating the underpressure within the liquid handler tool, with the liquid handler tool comprising the liquid handler tip for aspirating the liquid.

Another aspect of the present invention relates to a computer program for aspirating the liquid out of the vial by the laboratory automation device. The computer program, when being executed by the controller of the laboratory automation device, is adapted to carry out the steps of the method as described above and in the following. Optionally, at least a part of the computer program may be executed by another computing device external to the laboratory automation device.

Another aspect of the present invention relates to a computer-readable medium, on which the computer program is stored. The computer-readable medium may be a hard disk, an USB storage device, a RAM, a ROM, an EPROM or a FLASH memory. The computer-readable medium may also be a data communication network, e.g. the Internet, which allows downloading a program code. In general, the computer-readable medium may be a non-transitory or transitory medium.

Determining the lowermost area of the upper surface of the probe material and aspirating, in other words suctioning, the liquid from the lowermost area of the upper surface of the probe material contributes to that a high, preferably maximal, amount of the liquid, more preferably all of the liquid, can be removed from the upper surface of the probe material and out of the vial. This may contribute to provide the probe material depleted of the liquid above the probe material.

The liquid covering the probe material may be referred to as supernatant. The liquid may be the fluid part of a suspension comprising the liquid and the probe material. The liquid may be blood or a culture medium and the suspension may be blood cells within the blood or, respectively, any cells within the culture medium.

The upper surface of the probe material may be slanted because of the vial having undergone a centrifugation process before sending the capturing signal to the camera. So, the upper surface of the probe material may not be horizontally oriented when an upper surface of the liquid is horizontally oriented. The upper surface of the probe material shaped in the centrifugation process may be slanted depending on the type of centrifuge rotor and radius used in the centrifugation process. In case of the vial being arranged in a carrier, eventually with further vials, and in case of the carrier being arranged in the centrifuge for carrying out the centrifugation process, the shape of the upper surface of the probe material may also depend on a position of the vial within the carrier. For example, when the carrier is centred with respect to an axis of rotation of the centrifuge, an inclination of the upper surface of the probe material may be all the steeper the more the position of the vial is closer to an edge of the carrier.

The probe material within the vial may have the shape of a pellet and may be referred to as probe pellet. The vial may have the shape of a tube and may be referred to as test tube or simply tube. The actuator may comprise a pipetting arm and the liquid handler tool may be a pipetting tool. The aspiration unit may comprise a pump for generating the underpressure. The aspiration unit may be coupled to the liquid handler tool via a pipe or hose. The same pump may be able to generate an overpressure for dispensing liquids from the liquid handler tool. Underpressure means a pressure below ambient pressure and overpressure means pressure above ambient pressure.

The liquid handler tool may be configured for moving the liquid handler tool into the vial in a first direction and in a plane perpendicular to the first direction. In case of the vial being oriented vertically, the first direction may be a vertical direction or Z-direction. In this context, the plane perpendicular to the first direction may be an XY-plane extending in an X-direction and a Y-direction perpendicular to the X-direction. Further in this context, the actuator may be configured for moving the liquid handler tool in the X-direction, the Y-direction, and the Z-direction. To this end, the actuator may comprise or may be coupled to one or more electric motors and/or electric drives. The position of the lowermost area of the upper surface of the probe material may comprise X-, Y-, and Z-coordinates of the lowermost area of the upper surface of the probe material.

The movement signal and the aspirating signal may be fused into one common liquid handler signal such that the information contained in the movement signal and the aspirating signal is encoded in the common liquid handler signal. The common liquid handler signal may be sent to the liquid handler and the liquid handler may be configured for moving the liquid handler tool to the lowermost area of the upper surface of the probe material and to aspirate the liquid from the lowermost area of the upper surface of the probe material upon receiving the liquid handler signal.

That the vial is transparent may mean that the vial is transparent at least within a part of the light spectrum in which the camera is sensitive. That the liquid handler tip is arranged "at" the lowermost area of the upper surface of the probe material may mean that the liquid handler tip is arranged above the upper surface of the probe material having a very small distance to the upper surface of the probe material. The very small distance may be in a range of 0.1 mm to 5 mm, e.g. in a range of 0.1 mm to 1 mm, e.g. in a range of 0.1 mm to 0.5 mm. The liquid handler tip may be arranged above the upper surface of the probe material to avoid disturbing the probe material and eventually aspirating the probe material.

After aspirating the liquid from the upper surface of the probe material, the liquid handler tool and in particular the liquid handler tip may be removed from the vial, e.g. by the actuator, and the removed liquid may be dispensed into a collection vessel.

The controller may be integrated in a housing of the laboratory automation device. Alternatively, the controller may be arranged outside of the housing. For example, the controller for controlling the laboratory automation device and thereby for carrying out the method may be a general-purpose computer communicatively coupled to the other components of the laboratory automation device being arranged within the housing of the laboratory automation device.

According to an embodiment of the invention, the laboratory automation device comprises a rotation unit for rotating the vial around a vertically oriented axis of rotation of the vial, and the method further comprises: sending a first rotation signal to the rotation unit after capturing the first image and before determining the position of the lowermost area of the upper surface of the probe material, with the first rotation signal and the rotation unit being configured such that the rotation unit rotates the vial around the axis of rotation such that an angular position of the vial after the rotation is different from an angular position of the vial before the rotation; and sending a second capturing signal to the camera, wherein the second capturing signal and the camera are configured such that the camera captures a second image of the vial and wherein the second image shows another view of the upper surface of the probe material than the first image because of the vial having been rotated, wherein the received image data generated by the camera are representative of the first image and the second image.

Rotating the vial after capturing the first image and capturing the second image after the rotation may contribute to a very accurate determination of the upper surface of the probe material within the vial, because it is not known in advance where at the circumference of the upper surface of the probe material its lowermost area is located and because the lowermost area may be covered against the camera by a higher area of the upper surface of the probe material at certain angular position of the vial. After rotating the vial, the lowermost area is arranged at another angular position and may be seen better from the camera than before rotating the vial, because it might be that the lowermost area is not covered by the higher area of the upper surface of the probe material anymore.

The first capturing signal and the second capturing signal may be fused into a common capturing signal such that the camera captures the first image before rotating the vial and the second image after rotating the vial automatically. In other words, the capturing signal, in particular the first capturing signal, and the camera may be configured such that the camera captures the first image before the rotation of the vial and the second image and in case further images after every rotation of the vial. Optionally, the vial may be rotated more than once and the camera may be configured for capturing correspondingly more images - one after each rotation, e.g. in reaction of corresponding further capturing signals or automatically.

According to an embodiment of the invention, the position of the lowermost area of the upper surface of the probe material is determined from the image data by determining a region of interest such that the region of interest covers an upper surface of the liquid, the upper surface of the probe material, and a bottom of the vial, and by carrying out an image analysis of the region of interest to determine the lowermost area of the upper surface of the probe material.

Determining the region of interest enables to carry out the image analysis on a restricted, narrow region only. This contributes to that a small amount of the image data may have to be analysed to find the lowermost area of the upper surface of the probe material. This may contribute to carry out the analysis quickly. This may contribute to a high throughput when removing the liquid out of two or more vials by the method and the laboratory automation device.

The region of interest may have a rectangular shape, for example. The upper surface of the liquid may be referred to supernatant upper surface and a level at which the upper surface of the liquid is located may be referred to as supernatant upper surface level. The upper surface of the probe material may be referred to as supernatant-pellet phase interface. The bottom of the vial may be used as a height reference, e.g. a zero-height reference.

According to an embodiment of the invention, the region of interest is determined such that it covers a periphery of the vial. This may contribute to determine the lowermost area very accurately, because in general the lowermost area is located at the periphery of the upper surface of the probe material and thereby at the periphery of the vial. The periphery of the vial may be located within the vial at the left or right inner wall of the vial.

According to an embodiment of the invention, the movement signal and the actuator are configured such that, when the actuator moves the liquid handler tool into the vial such that the liquid handler tip is dipped into the liquid and is moved towards the lowermost area of the upper surface of the probe material, the actuator firstly moves the liquid handler tool into the vial such that the liquid handler tip is arranged vertically above the lowermost area, then, the actuator moves the liquid hander tool downwards until a touch of the liquid handler tip touching the liquid is detected, then, the actuator lowers the liquid handler tool until the liquid handler tip is arranged between an upper surface of the liquid and the upper surface of the probe material, and the actuator further lowers the liquid handler tool while aspirating the liquid in reaction to receiving the aspiration signal such that the liquid handler tip stays between the upper surface of the liquid and the upper surface of the probe material until the liquid handler tip is arranged at the lowermost area of the upper surface of the probe material.

That the liquid handler tip is arranged "vertically above the lowermost area" may mean that a projection of the liquid handler tip in vertical direction on the surface of the probe material overlaps the lowermost area. Alternatively or additionally, that the liquid handler tip is arranged "vertically above the lowermost area" may mean that, when the liquid handler tip would be lowered from this position in vertical direction down to the surface of the probe material, the liquid handler tip touches the lowermost area. The liquid handler tip touching the liquid may be detected by electrical detection (cLLD) or pressure detection (pLLD).

According to an embodiment of the invention, when the actuator lowers the liquid handler tool until the liquid handler tip is arranged between an upper surface of the liquid and the upper surface of the probe material, the actuator lowers the liquid handler tool until the liquid handler tip is arranged at a predetermined first distance below the upper surface of the liquid, and the first distance is smaller than a distance from the upper surface of the liquid to the lowermost area of the upper surface of the probe material. The predetermined first distance may be in a range of e.g. 0.5 mm to 5 mm, e.g. 1 mm to 3 mm, e.g. about 2 mm.

According to an embodiment of the invention, when the actuator further lowers the liquid handler tool while aspirating the liquid in reaction to receiving the aspiration signal such that the liquid handler tip stays between the upper surface of the liquid and the upper surface of the probe material, the liquid handler tool is lowered such that the first distance is maintained until a predetermined amount of the liquid is aspirated, and then the liquid handler tip is lowered until it is arranged at a second distance above the lowermost area, wherein the second distance is smaller than the first distance. The predetermined amount may be in a range of e.g. 70% to 90%, e.g. about 80%. The predetermined second distance may be in a range of e.g. 0.1 mm to 1 mm, e.g. 0.2 mm to 0.5 mm, e.g. about 0.3 mm.

According to an embodiment of the invention, the aspiration signal and the liquid handler are configured such that, when the liquid handler tip is arranged at the lowermost area of the upper surface of the probe material and when the liquid handler aspirates the liquid, the aspiration is maintained until the liquid is removed from the vial without further moving the liquid handler tool. That "the liquid is removed" may mean that more than 90% are removed, e.g. that more than 95% are removed, e.g. that all the liquid is removed.

According to an embodiment of the invention, after determining the position of the lowermost area of the upper surface of the probe material from the image data and before sending the movement signal to the actuator, the vial is arranged in a carrier such that vial has a predetermined orientation with respect to a position of the lowermost area of the upper surface of the probe material. This enables to uniformly arrange the vials in the carrier with respect to the orientation of their lowermost areas. For example, all the vials within the same carrier may be oriented such that virtual lines from the centers of the vials to their lowermost areas are parallel to each other and directed in the same direction, which may correspond to the predetermined orientation. This may enable to aspirate the liquid out of all vials in one row of the carrier simultaneously by the liquid handler tools being arranged at the same actuator, in particular when the actuator cannot move the liquid handler tools independent from each other in all directions.

According to an embodiment of the invention, the method comprises, before sending the first capturing signal to the camera, sending a transport signal to the liquid handler, wherein the transport signal and the liquid handler are configured for transporting the vial in a field of view of the camera. This enables the camera to capture the first image of the vial and, in case, further images of the vial. Optionally, the rotation unit may be used by the liquid handler to transport the vial into the field of view of the camera. For example, a gripper of the rotation unit may be used to grip the vial, e.g. when it is arranged in the carrier, and to transfer the vial into the field of view of the camera. Alternatively, a dedicated transport unit, eventually comprising a separate gripper for gripping the vial, may be arranged for transporting the vial into the field of view of the camera as a component of the laboratory automation device, in particular of the liquid handler.

According to an embodiment of the invention, the laboratory automation device comprises the rotation unit for rotating the vial around the vertically oriented axis of rotation of the vial.

It has to be understood that features, advantages and/or embodiments of one of the aspects as described above and in the following may be features of another one of the aspects as described in the above and in the following. However, a repetitive explanation of these features, advantages and embodiments is omitted in order to provide a concise description and in order not to obscure the inventive idea of the present invention.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 shows a perspective view of an exemplary laboratory automation device, according to an embodiment of the invention.
Fig. 2 shows a side view of an example of a liquid handler tip and a vial comprising a probe material covered by a liquid, according to an embodiment of the invention.
Fig. 3 shows a flow-chart of a method for aspirating the liquid out of the vial of figure 2 by the laboratory automation device of figure 1, according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

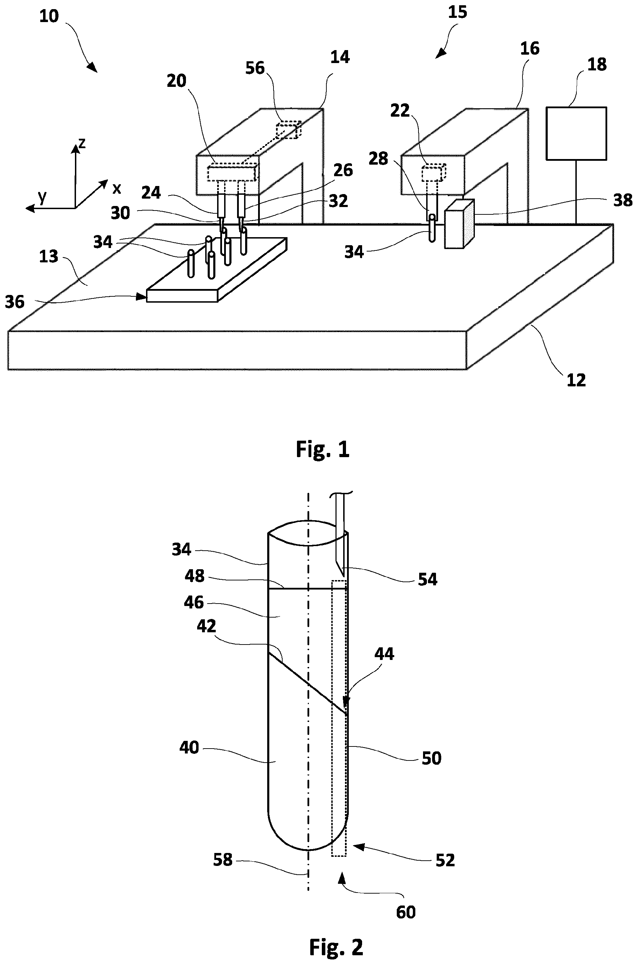

Fig. 1 shows a perspective view of an exemplary laboratory automation device 10, according to an embodiment of the invention. The laboratory automation device 10 comprises a workbench 12, a liquid handler 15, and a controller 18, with the liquid handler 15 being communicatively coupled to the controller 18.

One or more vials 34 may be arranged on a carrier 36. The vials 34 may be arranged on the carrier 36 in rows and columns. The carrier 36 and in particular the vials 34, may be arranged on the workbench 12. The vials 34 may be transparent. The vials 34 each may have the shape of a tube and may be referred to as test tube or simply tube.

The liquid handler 15 may comprise a treatment unit 14 and a rotation unit 16. The treatment unit 14 may comprise an actuator 20 and at least one liquid handler tool, e.g. a first liquid handler tool 30 and a second liquid handler tool 32, coupled to the actuator 20 via a corresponding liquid handler channel, e.g. a first liquid handler channel 24 and, respectively, a second liquid handler channel 26. The actuator 20 may comprise a pipetting arm. The liquid handler tools 30, 32 each may comprise or may be a pipetting tool. The actuator 20 may comprise or may be coupled to one or more electric motors and/or electric drives for moving the actuator 20 the liquid handler channels 24, 26, and/or the liquid handler tools 30, 32.

The liquid handler 15 may further comprise an aspiration unit 56 coupled to the liquid handler tools 30, 32. The aspiration unit 56 may be configured for generating an underpressure within the liquid handler tools 30, 32. The aspiration unit 56 may comprise an underpressure pump (not shown) for generating the underpressure. The aspiration unit 56 may be part of or coupled to the liquid handler tools 30, 32 via an underpressure pipe or hose.

The rotation unit 16 may comprise a handling arm 22. A gripper 28 may be arranged at the handling arm 22. The gripper 28 may be configured for gripping one of the vials 34. The rotation unit 16 may be configured for gripping one of the vials 34 via the gripper 28 and for rotating the gripped vial 34 via the handling arm 22.

The laboratory automation device 10 may comprise a camera 38. The camera 38 may be communicatively coupled to the controller 18 and may be configured for capturing an image of one of the vials 34 gripped by the gripper 28. So, the camera 38 is oriented such that the vial 34 gripped by the gripper 28 may be arranged within a field-of-view of the camera 38, e.g. by the gripper 28. That the vials 34 are transparent may mean that the vials 34 are transparent at least within a part of the light spectrum in which the camera 38 is sensitive. The gripper 28 may be configured for removing one of the vials 34 from the carrier 36, for rotating the gripped vial 34, and for arranging the vial 34 in the carrier 36 after the rotation.

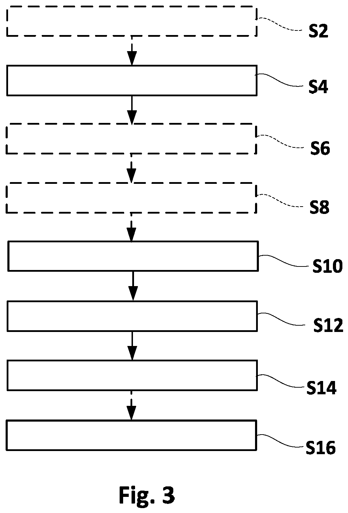

The controller 18 may be configured for controlling the laboratory automation device 10. To this end, the controller 18 may comprise a memory (not shown) for storing image data and a processor (not shown) communicatively coupled to the memory and being configured for carrying out a method as described below with respect to figure 3. The controller 18 may be integrated in a housing of the laboratory automation device 10. Alternatively, the controller 18 may be arranged outside of the housing. For example, the controller 18 for controlling the laboratory automation device 10 may be a general-purpose computer communicatively coupled to the other components of the laboratory automation device 10 and eventually being arranged within the housing of the laboratory automation device 10.

The actuator 20 may be configured for moving the liquid handler tools 30, 32 into the vials 34 in a first direction and in a plane perpendicular to the first direction. The first direction may be a Z-direction being oriented vertically. The plane perpendicular to the first direction may be a horizontal plane and/or an XY-plane extending in an X-direction and a Y-direction perpendicular to the X-direction. The actuator 20 may be configured for moving the liquid handler tools 30, 32 in the X-direction, the Y-direction, and the Z-direction.

Fig. 2 shows a side view of an example of a liquid handler tip 54 and one of the vials 34 of figure 1 comprising a probe material 40 covered by a liquid 46, according to an embodiment of the invention. The liquid handler tip 54 is a component of one of the liquid handler tools 30, 32 of figure 1. The laboratory automation device 10 is configured for aspirating the liquid 46 out of the vial 34. The actuator 20 is configured for moving the liquid handler tools 30, 32 into corresponding vials 34, and the liquid handler tip 54 is configured for being arranged within the vial 34 and for aspirating the liquid 46.

In figure 2, only one of the vials 34 is shown. However, the laboratory automation device 10 may be configured for treating two or more of the vials 34 simultaneously by the liquid handler tools 30, 32. In particular, the first liquid handler tool 30 may be used for aspirating the liquid 46 out of a first one of the vials 34 and the second handler tool 32 may be used simultaneously for aspirating the liquid 46 out of a second one of the vials 34.

The liquid 46 covering the probe material 40 may be referred to as supernatant. The liquid 46 may be the fluid part of a suspension comprising the liquid 46 and the probe material 40. The liquid 46 may be blood serum or blood plasma or a culture medium and the probe material 40 may be blood cells or, respectively, any other cells. The probe material 40 may be suspended in the liquid 46 before centrifugation. After the centrifugation, the probe material 40 and the liquid 46 are separated.

An upper surface of the probe material 42 may be slanted with respect to a horizontal plane, e.g. because of the vial 34 having undergone a centrifugation process before being arranged on the workbench 12. So, the upper surface 42 of the probe material 40 may not be horizontally oriented when an upper surface 48 of the liquid 46 is horizontally oriented. The upper surface 42 of the probe material 40 shaped in the centrifugation process may be slanted depending on the type of centrifuge rotor and radius used in the centrifugation process. In case of the vial 34 being arranged in the carrier 36, eventually with further ones of the vials 34, and in case of the carrier 36 being arranged in the centrifuge for carrying out the centrifugation process (not shown), the shape of the upper surface 42 of the probe material 40 may also depend on a position of the vial 34 within the carrier 36. For example, when the carrier 36 is centred with respect to an axis of rotation of the centrifuge, an inclination of the upper surface 42 of the probe material 40 may be all the steeper the more the position of the vial is farther away from the axis of rotation of the centrifuge and/or the closer the position of the vial is to an edge of the carrier 36.

The probe material 40 within the vial 34 may have the shape of a pellet and may be referred to as probe pellet. The upper surface 48 of the liquid 46 may be referred to supernatant upper surface and a level at which the upper surface 48 of the liquid 46 is located may be referred to as supernatant upper surface level. The upper surface 42 of the probe material 40 may be referred to as supernatant-pellet phase interface.

A region of interest 50 may be determined before aspirating the liquid 46 out of the vial 34. The region of interest 50 may be arranged at a periphery 60 of the vial 34 and may be determined such that it overlaps the upper surface 48 of the liquid 46 and a bottom 52 of the vial 34. The periphery 60 of the vial 34 may be located within the vial 34 at the left or right inner wall of the vial 34, as seen in figure 2. The region of interest 50 may have a rectangular shape, for example. The bottom 52 of the vial 34 may be used as a height reference, e.g. a zero-height reference.

The vial 34 may be rotational-symmetric with respect to an axis of rotation 58 of the vial 34. The rotation unit 16, in particular the handling arm 22 and the gripper 28, may be configured for rotating the vial 34 around the axis of rotation 58 when it is vertically oriented.

Because of the upper surface 42 of the probe material 40 being slanted, a lowermost area 44 of the upper surface 42 of the probe material 40 may be arranged within the periphery 60 of the vial 34, e.g. at an inner wall of the vial 34. A position of the lowermost area 44 may be defined by X-, Y-, and Z-coordinates.

Fig. 3 shows a flow-chart of a method for aspirating the liquid 46 out of the vial 34 of figure 2 by the laboratory automation device 10 of figure 1, according to an embodiment of the invention. The method may be carried out by the controller 18. The method may be carried out at two or more of the vials 34 simultaneously, e.g. with the two, or optionally more, liquid handler tools 30, 32.

Before starting the method, all vials 34 with probe materials 40 and liquids 46 to be removed may be arranged on the workbench 12, optionally within the carrier 36. The vials 34 have been centrifuged in advance, e.g. arranged in the carrier 36.

In an optional step S2, a first vial 34 of the vials 34 may be gripped and transferred into a field of view of the camera 38. To this end, a transport signal may be sent to the liquid handler 15 before sending the first capturing signal to the camera 38. The transport signal and the liquid handler 15 may be configured for transporting the vial 34 into the field of view of the camera 38. Optionally, the rotation unit 16 may be used by the liquid handler 15 to transport the vial 34 into the field of view of the camera 38. For example, the gripper 28 of the rotation unit 16 may be used to grip the vial 34, e.g. when it is arranged in the carrier 36, and to transfer the vial 34 into the field of view of the camera 38. Alternatively, a dedicated transport unit (not shown), which may comprise a separate gripper (not shown) for gripping the vial 34, may be arranged for transporting the vial 34 into the field of view of the camera 38 as a component of the laboratory automation device 10, in particular of the liquid handler 15.

In step S4, a first capturing signal may be sent to the camera 38. The first capturing signal and the camera 38 may be configured such that the camera 38 captures a first image of the vial 34, e.g. the first vial 34, such that the first image shows a first view of at least the upper surface 42 of the probe material 40 covered by the liquid 46 within the corresponding vial 34.

In an optional step S6, a first rotation signal may be sent to the rotation unit 16. The first rotation signal and the rotation unit 16 may be configured such that the rotation unit 16 rotates the vial 34, from which the first image has been taken, around the axis of rotation 58 by the gripper 28. After the rotation, the corresponding vial 34 is rotated about less than 360° with respect to its angular position before having been rotated such that an angular position of the vial 34 after the rotation is different from an angular position of the vial 34 before the rotation.

In an optional step S8, which may be carried out after optional step S6 has been carried out, a second capturing signal may be sent to the camera 38. The second capturing signal and the camera 38 may be configured such that the camera 38 captures a second image of the vial 34, from which the first image has been taken, wherein the second image shows another view of the upper surface 42 of the probe material 40 of the corresponding vial 34 than the first image, because of the vial 34 having been rotated.

The first capturing signal, the second capturing signal, and optionally the rotation signal, may be fused into a common capturing signal such that the camera 38 captures the first image before rotating the vial 34 and the second image after rotating the vial 34 automatically. Optionally, the vial 34 may be rotated more than once by the rotation unit 16, e.g. in reaction to receiving corresponding further rotation signals or automatically, and the camera 38 may be configured for capturing correspondingly more images - one after each rotation - automatically. In other words, the capturing signal, in particular the first capturing signal, and the camera 38 may be configured such that the camera 38 captures the first image before the rotation of the vial 34 and the second image and in case further images after every rotation of the vial 34. In case of further rotations, the vial 34 may be rotated such that the vial 34 is positioned at a new angular position after every rotation.

In a step S10, the image data generated by the camera 38 may be received. The image data may be representative of at least the first image, and in case of the second and/or correspondingly more images, of the second and, respectively, more images. For example, the image data generated by the camera 38 may be representative of the first image, the second image, and, in case, further images.

In a step S12, the position of the lowermost area 44 of the upper surface 42 of the probe material 40 may be determined from the image data by image processing. The position of the lowermost area 44 of the upper surface 42 of the probe material 40 may be determined from the image data by firstly determining the region of interest 50. Then, the image analysis of the region of interest 50 may be carried out to determine the lowermost area 44 of the upper surface 42 of the probe material 40. Algorithms for determining positions and extensions of surfaces, such as e.g. the upper surface 42 of the probe material 40, are well known in the art. When the position and extension of the upper surface 42 of the probe material 40 is known, the lowermost area 44 is that part of the upper surface 42 of the probe material 40 which has the lowest or smallest Z-coordinate. Alternatively, a machine learning algorithm may be trained to determine the lowermost area 44, e.g. by supervised learning with the help of an amount of labelled images showing vials with corresponding probe materials and liquids. After determining the lowermost area 44 of the upper surface 42 of the probe material 40 within the vial 34, the vial 34 may be arranged in the carrier 36, e.g. by the gripper 28.

The steps S2 to S12 may be carried out for every vial 34 within the carrier 36 one after the other such that image data of all of the vials 34 may be available for the controller 18 and that the lowermost areas 44 of the upper surfaces 42 of the probe materials 40 in all of the vials 34 may be known to the controller 18.

Further, after determining the lowermost areas 44 of the vials 34, the vials 34 may be arranged in the carrier 36, e.g. by the gripper 28, such that the vials 34 are uniformly oriented with respect to the orientation of their lowermost areas 44. For example, all the vials 34 within the same carrier 36 may be oriented such that virtual lines from the centres of the vials 34 to their lowermost areas 44 are parallel to each other and directed in the same direction. This may help to aspirate the liquid 36 out of all vials 34 in one row of the carrier 36 simultaneously by the liquid handler tools 30, 32 being arranged at the same actuator, in particular when the actuator 20 cannot move the liquid handler tools 30, 32 independently from each other in all directions.

In a step S14, a movement signal may be sent to the actuator 20. The movement signal and the actuator 20 may be configured such that the actuator 20 moves the liquid handler tools 30, 32 into the corresponding vials 34 such that the corresponding liquid handler tip 54 is dipped into the liquid 46 and is moved towards the lowermost area 44 of the upper surface 42 of the probe material 40, upon receiving the movement signal. For example, the actuator 20 may be configured for firstly moving the liquid handler tools 30, 32 into the corresponding vials 34 such that the liquid handler tips 54 are arranged vertically above the corresponding lowermost area 44. Then, the actuator 20 may be configured for moving the liquid hander tools 30, 32 downwardly until touches of the liquid handler tips 54 touching the liquids 46 is detected.

Then, the actuator 20 may further lower the liquid handler tools 30, 32 until the liquid handler tips 54 are arranged between the upper surfaces 48 of the liquids 46 and the upper surfaces 42 of the corresponding probe materials 40. For example, the actuator 20 may lower the liquid handler tools 30, 32 until the liquid handler tips 54 are arranged at a predetermined first distance below the upper surfaces 48 of the corresponding liquids 46. The first distance may be smaller than a distance from the upper surface 48 of the liquid 46 to the lowermost area 44 of the upper surface 42 of the probe material 40. The predetermined first distance may be in a range of e.g. 0.5 mm to 5 mm, e.g. 1 mm to 3 mm, e.g. about 2 mm.

In a step S16, an aspiration signal may be sent to the liquid handler 15. The aspiration signal and the liquid handler 15 may be configured such that the liquid handler 15 aspirates the liquid 46 from above the lowermost areas 44 of the upper surfaces 42 of the probe materials 40 by the corresponding liquid handler tips 30, 32 upon receiving the aspiration signal. The actuator 20 may further lower the liquid handler tools 30, 32 while aspirating the liquid 46 in reaction to receiving the aspiration signal such that the liquid handler tips 54 stay between the corresponding upper surfaces 48 of the liquids 46 and the upper surfaces 42 of the corresponding probe materials 40 until the liquid handler tips 54 are arranged at the lowermost areas 44 of the upper surfaces 42 of the corresponding probe materials 40.

When the actuator 20 further lowers the liquid handler tools 30, 32 while aspirating the liquid 46 in reaction to receiving the aspiration signal such that the liquid handler tips 54 stay between the upper surfaces 48 of the liquids 46 and the upper surfaces 42 of the corresponding probe materials 40, the liquid handler tools 30, 32 may be lowered such that the first distance is maintained until a predetermined amount of the liquid 46 is aspirated. Then, the liquid handler tips 54 may be lowered until they are arranged at a second distance above the corresponding lowermost area 44, wherein the second distance may be smaller than the first distance. The predetermined amount may be in a range of e.g. 70% to 90%, e.g. about 80%. The predetermined second distance may be in a range of e.g. 0.1 mm to 1 mm, e.g. 0.2 mm to 0.5 mm, e.g. about 0.3 mm.

The aspiration signal and the liquid handler 15 may be configured such that, when the liquid handler tips 54 are arranged at the corresponding lowermost areas 44 of the upper surfaces 42 of the probe materials 40 and when the liquid handler 15 aspirates the liquid 46, the aspiration is maintained until the liquid 46 is removed from the vial 34 without further moving the liquid handler tools 30, 32. That "the liquid is removed" may mean that more than 90% are removed, e.g. that more than 95% are removed, e.g. that all the liquid is removed.

That one or more of the liquid handler tips 54 are arranged "at" the lowermost areas 44 of the upper surfaces 42 of the corresponding probe materials 40 may mean that the liquid handler tips 54 are arranged above the upper surfaces 42 of the corresponding probe materials 40 having a very small distance to the upper surfaces 42 of the probe materials 40. The very small distance may be in a range of 0.1 mm to 5 mm, e.g. in a range of 0.1 mm to 1 mm, e.g. in a range of 0.1 mm to 0.5 mm. The liquid handler tips 54 may be arranged above the upper surfaces 42 of the probe materials 40 to avoid disturbing the probe materials 40 and eventually aspirating the probe materials 40.

Determining the lowermost areas 44 of the upper surfaces 42 of the probe materials 40 and aspirating, in other words suctioning, the liquids 46 from the lowermost areas 44 may contribute to that a high, preferably maximal, amount of the liquid 46, more preferably all of the liquid 46, can be removed from the vials 34.

The movement signal and the aspirating signal may be fused into one common liquid handler signal such that the information contained in the movement signal and the aspirating signal is encoded in the common liquid handler signal. The common liquid handler signal may be sent to the liquid handler 15 and the liquid handler 15 may be configured for moving the liquid handler tools 30, 32 to the lowermost areas 44 of the upper surfaces 42 of the probe materials 40 and to aspirate the liquids 46 from these lowermost areas 44.

After aspirating the liquids 46 from the upper surfaces 42 of the probe materials 40, the liquid handler tools 30, 32 and in particular the corresponding liquid handler tips 54 may be removed from the vials 34, e.g. by the actuator 20, and the removed liquids 46 may be dispensed into a collection vessel (not shown).

A computer program for aspirating the liquid 36 out of the vials 34 by the laboratory automation device 10 may be configured such that, when being executed by the controller 18 of the laboratory automation device 10, carries out the above steps of the method. Optionally, at least a part of the computer program may be executed by another computing device external to the laboratory automation device 10.

The computer program may be stored on a computer-readable medium. The computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. The computer-readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: laboratory automation device
- 12: workbench
- 13: upper surface of the workbench
- 14: treatment unit
- 15: liquid handler
- 16: rotation unit
- 18: controller
- 20: actuator
- 22: handling arm
- 24: first liquid handler channel
- 26: second liquid handler channel
- 28: gripper
- 30: first liquid handler tool
- 32: second liquid handler tool
- 34: vial
- 36: carrier
- 38: camera
- 40: probe material
- 42: upper surface of probe material
- 44: lowermost area
- 46: liquid
- 48: upper surface of liquid
- 50: region of interest
- 52: bottom of vial
- 54: liquid handler tip
- 56: aspiration unit
- 58: axis of rotation
- 60: periphery

## Claims

1. A method for aspirating a liquid (46) out of a vial (34) by a laboratory automation device (10), with the vial (34) being transparent and comprising the liquid (46) and a probe material (40) covered by the liquid (46), with the laboratory automation device (10) comprising a camera (38) for capturing an image of the vial (34) and a liquid handler (15), with the liquid handler (15) comprising at least one liquid handler tool (30, 32), an actuator (20) coupled to the liquid handler tool (30, 32) and being configured for moving the liquid handler tool (30, 32) into the vial (34), and an aspiration unit (56) coupled to the liquid handler tool (30, 32) and being configured for generating an underpressure within the liquid handler tool (30, 32), with the liquid handler tool (30, 32) comprising a liquid handler tip (54) for aspirating the liquid (46), the method comprising:
sending a first capturing signal to the camera (38), wherein the first capturing signal and the camera (38) are configured such that the camera (38) captures a first image of the vial (34) such that the first image shows a first view of at least an upper surface (42) of the probe material (40) covered by the liquid (46);
receiving image data from the camera (38), wherein the image data is representative of the first image;
determining a position of a lowermost area (44) of the upper surface (42) of the probe material (40) from the image data;
sending a movement signal to the actuator (20), wherein the movement signal and the actuator (20) are configured such that the actuator (20) moves the liquid handler tool (30, 32) into the vial (34) such that the liquid handler tip (54) is dipped into the liquid (46) and is moved towards the lowermost area (44) of the upper surface (42) of the probe material (40), upon receiving the movement signal; and
sending an aspiration signal to the liquid handler (15), wherein the aspiration signal and the liquid handler (15) are configured such that the liquid handler (15) aspirates the liquid (46) from above the lowermost area (44) of the upper surface (42) of the probe material (40) by the liquid handler tip (54) upon receiving the aspiration signal.

2. The method of claim 1, with the laboratory automation device (10) comprising a rotation unit (16) for rotating the vial (34) around a vertically oriented axis of rotation (58) of the vial (34), the method further comprising:
sending a first rotation signal to the rotation unit (16) after capturing the first image and before determining the position of the lowermost area (44) of the upper surface (42) of the probe material (40), with the first rotation signal and the rotation unit (16) being configured such that the rotation unit (16) rotates the vial (34) around the axis of rotation (58) such that an angular position of the vial (34) after the rotation is different from an angular position of the vial (34) before the rotation; and
sending a second capturing signal to the camera (38), wherein the second capturing signal and the camera (38) are configured such that the camera (38) captures a second image of the vial (34) and wherein the second image shows another view of the upper surface (42) of the probe material (40) than the first image because of the vial (34) having been rotated,
wherein the received image data generated by the camera (38) are representative of the first image and the second image.

3. The method of one of the preceding claims, wherein the position of the lowermost area (44) of the upper surface (42) of the probe material (40) is determined from the image data by
determining a region of interest (50) such that the region of interest (50) covers an upper surface of the liquid (46), the upper surface (42) of the probe material (40), and a bottom (52) of the vial (34), and
carrying out an image analysis of the region of interest (50) to determine the lowermost area (44) of the upper surface (42) of the probe material (40).

4. The method of claim 3, wherein
the region of interest (50) is determined such that it covers a periphery (60) of the vial (34).

5. The method in accordance with one of the preceding claims, wherein the movement signal and the actuator (20) are configured such that, when the actuator (20) moves the liquid handler tool (30, 32) into the vial (34) such that the liquid handler tip (54) is dipped into the liquid (46) and is moved towards the lowermost area (44) of the upper surface (42) of the probe material (40),
the actuator (20) firstly moves the liquid handler tool (30, 32) into the vial (34) such that the liquid handler tip (54) is arranged vertically above the lowermost area (44),
then, the actuator (20) moves the liquid (46) handler tool downwards until a touch of the liquid handler tip (54) touching the liquid (46) is detected,
then, the actuator (20) lowers the liquid handler tool (30, 32) until the liquid handler tip (54) is arranged between an upper surface of the liquid (46) and the upper surface (42) of the probe material (40), and
the actuator (20) further lowers the liquid handler tool (30, 32) while aspirating the liquid (46) in reaction to receiving the aspiration signal such that the liquid handler tip (54) stays between the upper surface of the liquid (46) and the upper surface (42) of the probe material (40) until the liquid handler tip (54) is arranged at the lowermost area (44) of the upper surface (42) of the probe material (40).

6. The method in accordance with claim 5, wherein
, when the actuator (20) lowers the liquid handler tool (30, 32) until the liquid handler tip (54) is arranged between an upper surface (48) of the liquid (46) and the upper surface (42) of the probe material (40), the actuator (20) lowers the liquid handler tool (30, 32) until the liquid handler tip (54) is arranged at a predetermined first distance below the upper surface (48) of the liquid (46), and
the first distance is smaller than a distance from the upper surface (48) of the liquid (46) to the lowermost area (44) of the upper surface (42) of the probe material (40).

7. The method in accordance with claim 6, wherein
, when the actuator (20) further lowers the liquid handler tool (30, 32) while aspirating the liquid (46) in reaction to receiving the aspiration signal such that the liquid handler tip (54) stays between the upper surface (48) of the liquid (46) and the upper surface (42) of the probe material (40), the liquid handler tool (30, 32) is lowered such that the first distance is maintained until a predetermined amount of the liquid (46) is aspirated, and
then the liquid handler tip (54) is lowered until it is arranged at a second distance above the lowermost area (44), wherein the second distance is smaller than the first distance.

8. The method in accordance with claim 7, wherein the aspiration signal and the liquid handler (15) are configured such that, when the liquid handler tip (54) is arranged at the lowermost area (44) of the upper surface (42) of the probe material (40) and when the liquid handler (15) aspirates the liquid (46), the aspiration is maintained until the liquid (46) is removed from the vial (34) without further moving the liquid handler tool (30, 32).

9. The method in accordance with one of the preceding claims, wherein, after determining the position of the lowermost area (44) of the upper surface (42) of the probe material (40) from the image data and before sending the movement signal to the actuator (20), the vial is arranged in a carrier (36) such that vial (34) has a predetermined orientation with respect to a position of the lowermost area (44) of the upper surface (42) of the probe material (40).

10. The method in accordance with one of the preceding claims, the method comprising, before sending the first capturing signal to the camera (38):
sending a transport signal to the liquid handler (15), wherein the transport signal and the liquid handler (15) are configured for transporting the vial (34) in a field of view of the camera (38).

11. A controller (18) for controlling a laboratory automation device (10), the controller (18) comprising a memory for storing image data and a processor communicatively coupled to the memory and being configured for carrying out the method in accordance with one of the preceding claims.

12. A laboratory automation device (10) for aspirating a liquid (46) out of a vial (34), with the vial (34) being transparent and comprising the liquid (46) and a probe material (40) covered by the liquid (46), the laboratory automation device (10) comprising:
a controller (18) in accordance with claim 10;
a camera (38) being communicatively coupled to the controller (18) and being configured for capturing an image of the vial (34); and
a liquid handler (15) being communicatively coupled to the controller (18) and comprising at least one liquid handler tool (30, 32), an actuator (20) coupled to the liquid handler tool (30, 32) and being configured for moving the liquid handler tool (30, 32) into the vial (34), and an aspiration unit (56) coupled to the liquid handler tool (30, 32) and being configured for generating an underpressure within the liquid handler tool (30, 32), with the liquid handler tool (30, 32) comprising a liquid handler tip (54) for aspirating the liquid (46).

13. The laboratory automation device (10) in accordance with claim 12, comprising:
a rotation unit (16) for rotating the vial (34) around a vertically oriented axis of rotation (58) of the vial (34).

14. A computer program for aspirating a liquid (46) out of a vial (34) by a laboratory automation device (10), the computer program, when being executed by a controller (18) of the laboratory automation device (10), being adapted to carry out the steps of the method of one of claims 1 to 10.

15. A computer-readable medium, in which a computer program according to claim 14 is stored.
